# EUROPEAN PATENT SPECIFICATION

(11) **EP 2 757 402 B1**
(45) Date of publication and mention of the grant of the patent: **30.03.2016**
(21) Application number: 13152215.3
(22) Date of filing: 22.01.2013
(51) Int. Cl.: G02B 21/08, G02B 21/16, G01N 21/64

(54) **Method of observing samples with a fluorescent microscope**
Verfahren zum Betrachten von Proben mit einem Fluoreszenzmikroskop
Procédé d'observation d'échantillons avec un microscope à fluorescence

(43) Date of publication of application: 23.07.2014
(73) Proprietor: FEI Company, Hillsboro, OR 97124-5793 (US)
(72) Inventor: Buijsse, Bart, 5646 JE Eindhoven (NL); Van Driel, Linda, 5685 JR Best (NL)
(74) Representative: Bakker, Hendrik

(56) References cited:
- EP-A1- 1 998 165
- WO-A1-99/22262
- US-A1- 2006 226 375
- SARTORI ET AL: "Correlative microscopy: Bridging the gap between fluorescence light microscopy and cryo-electron tomography", JOURNAL OF STRUCTURAL BIOLOGY, ACADEMIC PRESS, UNITED STATES, vol. 160, no. 2, 10 October 2007 (2007-10-10), pages 135-145, XP022346061, ISSN: 1047-8477, DOI: 10.1016/J.JSB.2007.07.011
- CINDI L. SCHWARTZ ET AL: "Cryo-fluorescence microscopy facilitates correlations between light and cryo-electron microscopy and reduces the rate of photobleaching", JOURNAL OF MICROSCOPY, vol. 227, no. 2, 1 August 2007 (2007-08-01), pages 98-109, XP055065629, ISSN: 0022-2720, DOI: 10.1111/j.1365-2818.2007.01794.x

## Description

The invention relates to a method of inspecting parts of a vitrified sample embedded in amorphous ice with a fluorescence microscope, at least part of the sample supported by a supporting carbon film, the fluorescence microscope illuminating the sample with excitation light to generate fluorescence or phosphorescence, said sample vulnerable to crystallization of the amorphous ice.

Such a method is known from SARTORI, Anna et al., 'Correlative microscopy: Bridging the gap between fluorescence light microscopy and cryo-electron tomography', J. Struct. Biol. 160 (2007), p. 135-145

Such a method is also known from SCHWARTZ, Cindy L et al., 'Cryo-fluorescence microscopy facilitates correlations between light and cryo-electron microscopy and reduces the rate of photobleaching', J. Microsc. 2007 Aug 227(Pt 2), pp 98-109.

The known method describes that in a setup for cryo-fluorescence microscopy a cryogenic vitrified sample is irradiated with light, and the fluorescence is observed.

Cryogenic vitrified samples are, for example, biological samples that are frozen to arrest a sample in a given state. The formation of ice crystals during the freezing should be avoided as these crystals damage the structures of the sample, for example by puncturing cell membranes. Crystallization is avoided by freezing the sample to a temperature below the glass transition temperature of water of approximately 130 K at an ultra-high cooling rate, for example in the range of 10⁵ K/s, or by cooling it by a combination of a high cooling rate and high pressure (10³ K/s @ 2000 bar). These are techniques known *per se,* and described in e.g. US patent document US 7,413,872 B2 and US patent document US 6,758,362 B2, and (possibly after the use of for example a cryo-microtome) result in a sample with a typical thickness of 1 µm or less.

It is known that, when exposing the sample to light, the response of fluorescent markers to light diminishes over time. This is known as photo-bleaching. It is noted that the effect of photo-bleaching is less pronounced at cryogenic temperatures than at room temperature.

After observing the sample with a light microscope and observing the fluorescence, the sample may be inspected in a Transmission Electron Microscope (TEM) for observing details with a resolution down to 10 nm or less. Therefore the samples are typically prepared on a TEM support grid. A TEM support grid is available from, for example, TED PELLA Inc., Redding, California, USA, see http://www.tedpella.com/supflm html/suptfilm.htm.

A popular type of grid is the so-named holey carbon grid, in which a carbon support film is used, the carbon support film showing holes. Sample material suspended over the holes and embedded in ice can be inspected with for example transmitted electrons without interference (diffraction) of the carbon support film. It is noted that also holey carbon grids are known where the holes are not through-holes, but very thin carbon films of, for example, 3 nm or less.

It is noted that it is known to make not a 2D image of the sample in the TEM, but a 3D tomogram. This is described in e.g. SARTORI, Anna et al., 'Correlative microscopy: Bridging the gap between fluorescence light microscopy and cryo-electron tomography', J. Struct. Biol. 160 (2007), p. 135-145. This results in a 3D image of the sample, instead of a 2D image.

During fluorescence microscopy intense illumination is desired, such that the fluorescent signal can be collected in short time periods. This is advantageous in terms of signal-to-noise (the noise during a short period is less than the noise during a long period), but also to minimize specimen drift during detection. Also the ease of use is improved this way, quick availability of a high quality image is advantageous for searching and focusing onto an area of interest.

A problem when using intense illumination is that heating may occur, damaging or destroying the specimen.

The invention intends to provide a solution to heating when using intense illumination.

To that end the method according to the invention is characterized in that
- the supporting carbon film shows holes or thickness variations resulting in position dependent absorbance of the excitation light, resulting in parts with a high absorption of the excitation light and parts with a low absorption of the excitation light,
- the parts of the sample to be inspected are located over holes or parts of the supporting carbon film with a low absorption of the excitation light; and
- the illumination is localized such that the parts of the supporting carbon film with a high absorption of the excitation light and bordering the parts of the sample to be inspected are not illuminated.

Obviously the heating is caused by absorption of the excitation light. The invention is based on the insight that the absorption of this light by a thin sample is often negligible, but that absorption by carbon is not. As an example: vitrified ice absorbs only very little light The heat that is generated in the carbon reaches the sample area by thermal conduction and in this way causes a temperature rise of the sample. The absorbance of thin carbon films is described in e.g. LARSON, D.M., et al. ,'The surface of evaporated carbon films is an insulating, high-bandgap material.', J. Struct. Biol. (2011).

Absorbance is described in terms of optical density, in which the optical density *A*(λ) is defined as *A*(λ) = log₁₀(*I*₀/*I*₁), with *I*₀ the amount of impinging light and *I*₁ the amount of transmitted light. LARSON shows in figure 2 that for a film thickness of more than 5 nm in close approximation A(λ) = [(D-5) x 0.016] nm⁻¹ with D the thickness of the carbon film in nm. In other words: a layer of 11 nm of carbon already has an optical density *A*(λ) = 0.1 and thus absorbs 21% of the impinging light, and a layer of 65 nm absorbs approximately 90% of the impinging light (*A*(λ) = 1).

A typical absorption figure of ice is of the order of 0.1 m⁻¹ in the 300-600 nm domain, and -assuming there is an absorbing carbon layer- this is thus negligible compared to the absorption by a carbon layer.

By using grids showing holes or thickness variations resulting in position dependent absorbance of the excitation light, and restricting inspection with intense illumination to areas of interest that are positioned over parts where the grid shows no or little absorbance, and avoiding illumination of the parts of the supporting film with a high absorption of the excitation light and bordering the parts of the sample to be inspected (positioned over the areas with low or no optical absorbance), dissipation due to intense illumination is avoided. As a result intense illumination can be used without damaging the sample.

It is noted that these effects are very notable when studying vitrified cryogenic samples, where a temperature rise results in crystallization and/or sublimation and thus damage of the sample.

It is noted that the person skilled in the art will understand that parts of the film far removed from the area of interest, that is: parts where heating (resulting in for example crystallization or sublimation) is allowed, may be illuminated by intense light, even if those parts show high absorbance. Also parts that are in directs contact with, for example, a copper mesh of the grid (or a material showing high thermal conductivity) may be illuminated without ice crystallization occurring.

It is further noted that the whole sample may be exposed to a low light level, for example to determine where the borders between low and high absorbance are, as long as this does not result in a rise of temperature where damage occurs (for example such a temperature increase that ice crystallization occurs).

Note that the temperature rise of a film not only depends on the absorbed light but also on the thermal conductivity of the film. Although a thinner film absorbs less light than a thick film, the thermal conduction of the thinner film also decreases and as a result the temperature rise can still be very high.

Localization of the illumination can be achieved in several ways: by rastering a beam of light over the sample combined with intensity modulation of said beam, by vectoring the beam of light, or by illuminating the sample with a broad beam of light that passed through for example a spatial light modulator (SLM). An SLM is known *per se* and is used to vary the phase and/or amplitude of the transmitted light. An example of its use is, for example, in LCD projectors.

It is noted that the use of a SLM in the optical illumination system of a FM is known and described in US patent no. US 7,884,337 B2. However, the SLM is here used to locally modulate the phase of the excitation light and does not vary the amount of impinging light on the sample (the intensity of light impinging on the sample).

It is important to realize that any other material that might be considered as a support film, as an alternative to carbon, is likely to have the same high absorbance as carbon. This is related to the wish to have a support film that is electrically conducting. Materials that are electrically conducting usually have a high optical absorbance.

The combination of FM with TEM results in a powerful correlative microscopy, in which information of two different microscopy techniques are combined. The FM locates the areas with fluorescent markers (such as Green Fluorescent Protein [GFP] or an immuno-label), while TEM can be used for much higher resolution and locating heavy metal markers. Also FM can locate large structures and identify areas of interest to be inspected in the TEM at much higher magnification.

Preferably the inspection is performed in an instrument comprising a FM mounted on the evacuable sample chamber of a TEM. Such instruments are commercially available as 'Tecnai with iCorr' from FEI Co., Hillsboro, USA.

In an aspect of the invention an apparatus including a fluorescent microscope equipped with an illumination system to illuminate a vitrified sample with excitation light, and a detector for detecting fluorescent radiation emerging from the sample, is characterized in that the illumination system comprises a spatial light modulator for modulating the intensity of the excitation light, and the fluorescence microscope comprises a controller to control the spatial light modulator to localize the illumination.

By equipping the illumination system of a fluorescence microscope with a spatial light modulator for modulating the intensity of the excitation light on the sample, and adding a controller for said spatial light modulator to the fluorescence microscope, the method described previously can be performed.

Preferably this is combined with an electron microscope, even more preferably with a transmission electron microscope.

The invention is now elucidated using figures, where identical reference numerals identify corresponding features. To that end:

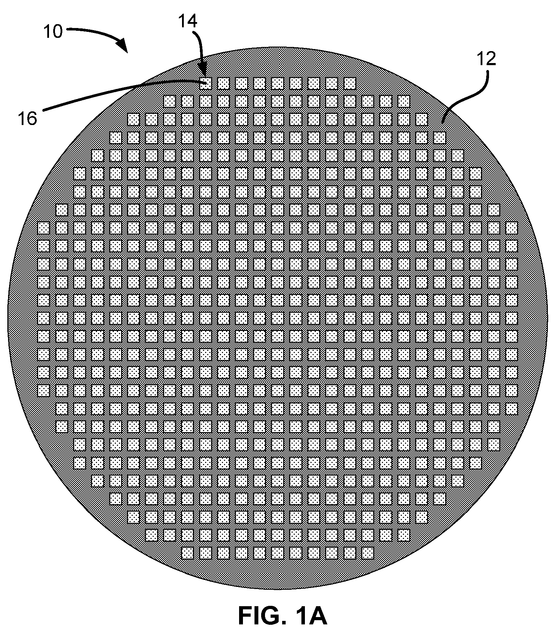

- Fig. 1A: schematically shows a top view of a TEM grid;

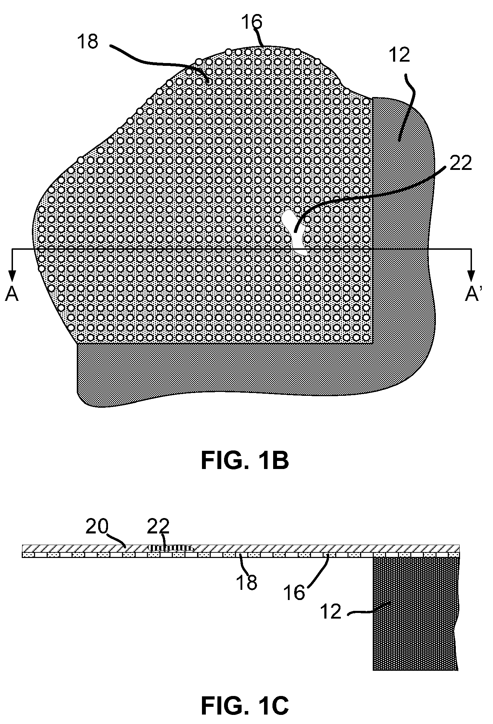

- Fig. 1B: schematically shows a detail of Fig. 1A; and
- Fig. 1C: schematically shows a cross-section of the detail shown in the figure 1 B.

Fig. 1A schematically shows a top view of a TEM grid.

The TEM grid 10 is a circular thin copper foil 12 with a thickness of approximately 25 µm and a diameter of 3.05 mm. The foil shows a large number of holes 14 (for example 400 per inch) and a thin film of carbon 16 on which a sample can be placed. The copper and carbon not only provide support, but also electrical conductivity to avoid charging.

It is noted that grids with a coarser or finer mesh are known, other materials (gold, nickel, (carbon coated) plastic), other forms of the holes (slots, hexagons), or forms differing from the thin circular foil (see e.g. US patent no. US 7,767,979 and US7,034,316).

It is further noted that the holes may show a thin layer of carbon, for example a layer of 3 nm. This is according to LARSON insufficient to absorb light or to provide an electrically conductive path from the sample to ground (the holder of the grid).

The film need not be a carbon film, essential for the invention is that the film is an absorbing film, and that the absorption is avoided by not illuminating the parts of the foil where illumination leads to heat dissipation.

Fig. 1B schematically shows a detail of fig. 1A,

Figure 1 B schematically shows a bar of the copper foil 12, the carbon film 16 and a large number of holes 18 in the carbon film. Over the carbon film and the holes a vitrified sample 22 in vitrified ice is provided.

Figure 1C schematically shows a cross-section along line AA' of the detail shown in fig. 1B.

Fig. 1C schematically shows a cross-section of a part of a copper bar 12, and carbon foil 16. Foil 16 shows a large number of holes 18. On top of the carbon film 16 a layer of vitrified ice 20 is shown, in which a sample 22 is present. An area of interest would thus be the part of the sample 22 that is located over a hole.

When illuminating the grid with intense light, the holes 18 are illuminated and the parts surrounding (bordering) the holes are not illuminated.

It is noted that the copper foil can also be another material, for example nickel, gold, (carbon coated) plastic, etc. It is further noted that the holes may show a thin layer of carbon, for example a layer of 3 nm. This is according to LARSON insufficient to absorb light or to provide an electrically conductive path from the sample to ground (the holder of the grid).

It is further noted that, although the invention is only explained on the hand of a vitrified cryogenic sample, similar effects occur when studying, for example, chemical processes just below the temperature of a phase change, or when studying for example proteins.

It is mentioned that localized illumination can be used in other applications as well, where illumination outside given boundaries, or avoiding certain areas, is demanded. We claim as follows:

### Non-patent literature:

[-1-] SARTORI, Anna et al., 'Correlative microscopy: Bridging the gap between fluorescence light microscopy and cryo-electron tomography', J. Struct. Biol. 160 (2007), p.
135-145.
[-2-] SCHWARTZ, Cindy L. et al.; 'Cryo-fluorescence microscopy facilitates correlations between light and cryo-electron microscopy and reduces the rate of photobleaching', J. Microsc. 2007 Aug 227(Pt 2), pp 98-109.
[-3-] Internet catalogue TED PELLA, Redding, California, USA, http://www.tedpella.com/supflm html/suptfilm.htm, created Jan. 21th, 2013.
[-4-] LARSON, D.M. et al., 'The surface of evaporated carbon films is an insulating, high-bandgap material.', J. Struct. Biol. (2011).

## Claims

1. Method of inspecting parts of a vitrified sample (22) embedded in amorphous ice with a fluorescence microscope, at least part of the sample supported by a supporting carbon film (16), the fluorescence microscope illuminating the sample with excitation light to generate fluorescence or phosphorescence, said sample vulnerable to crystallization of the amorphous ice,
**characterized in that**
• the supporting carbon film shows holes (18) or thickness variations resulting in position dependent absorbance of the excitation light, resulting in parts with a high absorption of the excitation light and parts with a low absorption of the excitation light,
• the parts of the sample to be inspected are located over holes (18) or parts of the supporting carbon film with a low absorption of the excitation light; and
• the illumination with excitation light is a localized illumination, the localization such that the parts of the supporting carbon film with a high absorption of the excitation light and bordering the parts of the sample to be inspected are not illuminated with excitation light.

2. The method of claim 1 in which the localization of the illumination is achieved by scanning a beam of excitation light over the sample and modulating the intensity of said beam.

3. The method of claim 1 in which the localization of the illumination is achieved by vector scanning a beam of excitation light over the sample.

4. The method of claim 1 in which the localization of the illumination is achieved by passing the excitation light through a spatial light modulator causing intensity modulation.

5. The method of claim 4 in which the spatial light modulator is an LCD type spatial light modulator imaged on the sample.

6. The method of any of the preceding claims in which the parts with a high absorption absorb more than 1%, more specifically more than 10%, most specifically more than 90% of the excitation light, and the parts with a low absorption absorb less than 1% of the excitation light.

7. The method of claim 6 in which the parts with a high absorption comprise a layer with at least 5 nm of carbon, more specifically at least 11 nm of carbon, most specifically at least 65 nm of carbon, and the parts with a low absorption comprise a layer with at most 5 nm or no carbon layer at all.

8. The method of any of the preceding claims in which prior to illuminating the sample to excite the sample while detecting fluorescence or phosphorescence, an image is taken with reflected or transmitted light to determine the borders of the supportive carbon film.

9. The method of any of the preceding claims in which the method further involves imaging the sample in a transmission electron microscope.

10. The method of claim 9 in which the transmission electron microscope is equipped with a sample chamber and the fluorescent image and the electron optical image are both acquired while the sample is on the sample chamber of the transmission electron microscope.

## Patentansprüche

1. Verfahren zum Untersuchen von Teilen einer in amorphem Eis eingebetteten vitrifizierten Probe (22) durch ein Fluoreszenzmikroskop, wobei mindestens ein Teil der Probe durch einen Kohlenstoffträgerfilm (16) gehalten wird, wobei das Fluoreszenzmikroskop die Probe mit Anregungslicht bestrahlt, um Fluoreszenz oder Phosphoreszenz zu erzeugen, wobei die Probe bezüglich einer Kristallisation des amorphen Eises anfällig ist;
**dadurch gekennzeichnet, dass**
der Kohlenstoffträgerfilm Löcher (18) oder Dickenänderungen aufweist, die zu einem positionsabhängigen Absorptionsvermögen des Anregungslichts führen, wodurch Abschnitte mit einem hohen Absorptionsvermögen für das Anregungslicht und Abschnitte mit einem niedrigen Absorptionsvermögen für das Anregungslicht erhalten werden;
die zu untersuchenden Teile der Probe über Löchern (18) oder Abschnitten des Kohlenstoffträgerfilms mit einem niedrigen Absorptionsvermögen für das Anregungslicht angeordnet sind; und
die Beleuchtung mit Anregungslicht eine lokal begrenzte Beleuchtung ist, wobei die lokale Begrenzung derart ist, das die Abschnitte des Kohlenstoffträgerfilms, die ein hohes Absorptionsvermögen für das Anregungslicht aufweisen und die zu untersuchenden Teile der Probe begrenzen, nicht mit Anregungslicht beleuchtet werden.

2. Verfahren nach Anspruch 1, wobei die lokale Begrenzung der Beleuchtung durch Scannen eines Strahls von Anregungslicht über die Probe und Modulieren der Intensität des Strahls erreicht wird.

3. Verfahren nach Anspruch 1, wobei die lokale Begrenzung der Beleuchtung durch Vektorscannen eines Strahls von Anregungslicht über die Probe erreicht wird.

4. Verfahren nach Anspruch 1, wobei die lokale Begrenzung der Beleuchtung durch Durchleiten des Anregungslichts durch einen räumlichen Lichtmodulator erreicht wird, der eine Intensitätsmodulation veranlasst.

5. Verfahren nach Anspruch 4, wobei der räumliche Lichtmodulator ein auf die Probe abbildender räumlicher Lichtmodulator des LCD-Typs ist.

6. Verfahren nach einem der vorangehenden Ansprüche, wobei die Abschnitte mit einem hohen Absorptionsvermögen mehr als 1%, vorzugsweise mehr als 10% und am bevorzugtesten mehr als 90% des Anregungslichts absorbieren, und wobei die Abschnitte mit einem niedrigen Absorptionsvermögen weniger als 1% des Anregungslichts absorbieren.

7. Verfahren nach Anspruch 6, wobei die Abschnitte mit einem hohen Absorptionsvermögen eine Schicht aufweisen, die mindestens 5 nm, bevorzugter mindestens 11 nm und am bevorzugtesten mindestens 65 nm Kohlenstoff aufweist, und wobei die Abschnitte mit einem niedrigen Absorptionsvermögen eine Schicht mit höchstens 5 nm Kohlenstoff oder keine Kohlenstoffschicht aufweisen.

8. Verfahren nach einem der vorangehenden Ansprüche, wobei vor dem Beleuchten der Probe zum Anregen der Probe, während Fluoreszenz oder Phosphoreszenz erfasst wird, ein Bild mit reflektiertem oder transmittiertem Licht aufgenommen wird, um die Grenzen des Kohlenstoffträgerfilms zu bestimmen.

9. Verfahren nach einem der vorangehenden Ansprüche, wobei das Verfahren ferner das Abbilden der Probe in einem Transmissionselektronenmikroskop aufweist.

10. Verfahren nach Anspruch 9, wobei das Transmissionselektronenmikroskop eine Probenkammer aufweist, und wobei das Fluoreszenzbild und das elektronenoptische Bild beide erfasst werden, während die Probe sich auf der Probenkammer des Transmissionselektronenmikroskops befindet.

## Revendications

1. Procédé d'inspection de parties d'un échantillon vitrifié (22) intégré dans de la glace amorphe avec un microscope à fluorescence, au moins une partie de l'échantillon étant supportée par un film de carbone de support (16), le microscope à fluorescence irradiant l'échantillon avec une lumière d'excitation pour générer une fluorescence ou une phosphorescence, ledit échantillon étant vulnérable à la cristallisation de la glace amorphe,
**caractérisé en ce que**
• le film de carbone de support présente des trous (18) ou des variations d'épaisseur résultant en une absorbance de la lumière d'excitation dépendant de la position, résultant en des parties avec une absorption élevée de la lumière d'excitation et des parties avec une faible absorption de la lumière d'excitation,
• les parties de l'échantillon à inspecter sont positionnées sur des trous (18) ou des parties du film de carbone de support avec une faible absorption de la lumière d'excitation ; et
• l'irradiation avec la lumière d'excitation est une irradiation localisée, la localisation étant telle que les parties du film de carbone de support avec une absorption élevée de la lumière d'excitation et bordant les parties de l'échantillon à inspecter ne sont pas irradiées avec la lumière d'excitation.

2. Procédé selon la revendication 1, dans lequel la localisation de l'irradiation est obtenue en balayant un faisceau de lumière d'excitation sur l'échantillon et en modulant l'intensité dudit faisceau.

3. Procédé selon la revendication 1, dans lequel la localisation de l'irradiation est obtenue par un balayage vectoriel d'un faisceau de lumière d'excitation sur l'échantillon.

4. Procédé selon la revendication 1, dans lequel la localisation de l'irradiation est obtenue en faisant passer la lumière d'excitation à travers un modulateur de lumière spatial provoquant une modulation d'intensité.

5. Procédé selon la revendication 4, dans lequel le modulateur de lumière spatial est un modulateur de lumière spatial du type LCD dont l'image est formée sur l'échantillon.

6. Procédé selon l'une quelconque des revendications précédentes, dans lequel les parties avec une absorption élevée absorbent plus de 1 %, plus spécifiquement plus de 10 %, encore plus spécifiquement plus de 90 % de la lumière d'excitation, et les parties avec une faible absorption absorbent moins de 1 % de la lumière d'excitation.

7. Procédé selon la revendication 6, dans lequel les parties avec une absorption élevée comprennent une couche avec au moins 5 nm de carbone, plus spécifiquement au moins 11 nm de carbone, encore plus spécifiquement au moins 65 nm de carbone, et les parties avec une faible absorption comprennent une couche avec au plus 5 nm de carbone ou pas du tout de couche de carbone.

8. Procédé selon l'une quelconque des revendications précédentes, dans lequel, avant l'irradiation de l'échantillon pour exciter l'échantillon tout en détectant la fluorescence ou la phosphorescence, une image est prise avec la lumière réfléchie ou transmise pour déterminer les limites du film de carbone de support.

9. Procédé selon l'une quelconque des revendications précédentes, dans lequel le procédé implique en outre l'imagerie de l'échantillon dans un microscope électronique à transmission.

10. Procédé selon la revendication 9, dans lequel le microscope électronique à transmission est équipé d'une chambre à échantillon et l'image fluorescente et l'image optique électronique sont toutes deux acquises alors que l'échantillon est dans la chambre à échantillon du microscope électronique à transmission.
